# EUROPÄISCHE PATENTSCHRIFT

(11) **EP 0 572 441 B1**
(45) Veröffentlichungstag und Bekanntmachung des Hinweises auf die Patenterteilung: **08.05.1996**
(21) Anmeldenummer: 92903954.3
(22) Anmeldetag: 13.02.1992
(51) Int. Cl.: F16C 39/06

(54) **MAGNETLAGERZELLE**
MAGNETIC-BEARING CELL
CELLULE DE PALIER MAGNETIQUE

(30) Priorität: 27.02.1991 DE 4106063
(43) Veröffentlichungstag der Anmeldung: 08.12.1993
(73) Patentinhaber: LEYBOLD AKTIENGESELLSCHAFT, D-63450 Hanau (DE); FORSCHUNGSZENTRUM JÜLICH GMBH, D-52428 Jülich (DE)
(72) Erfinder: REIMER, Peter, D-5000 Köln 41 (DE); SCHNEIDER, Helmut, D-5352 Zülpich (DE); FREMEREY, Johann, K., D-5300 Bonn (DE)
(74) Vertreter: Leineweber, Jürgen, Dipl.-Phys.
(86) Internationale Anmeldenummer: EP9200314
(87) Internationale Veröffentlichungsnummer: WO9215795

(56) Entgegenhaltungen:
- EP-A- 0 155 624
- EP-A- 0 332 979
- DE-A- 3 409 047
- FR-A- 2 127 772

## Beschreibung

Die Erfindung bezieht sich auf eine rotationssymmetrisch aufgebaute Magnetlagerzelle mit einem um die zentrale Achse der Zelle drehbar angeordneten Rotor, der eine Welle und zwei auf der Welle mit axialem Abstand befestigte, axial magnetisierte Permanentmagnetringe aufweist, sowie mit einem Stator, der zwei Ringspulen, Polbauteile und eine in den Spalt zwischen den Permanentmagneten des Rotors hineinragende Ringscheibe aus nicht magnetisierbarem Material hoher elektrischer Leitfähigkeit aufweist, wobei die Rotor- und Statorbauteile derart zueinander angeordnet sind, daß ein die zentrale Achse torroidal umgebender Magnetfluß erzeugt wird.

Magnetlagerzellen dieser Art, wie sie aus der DE-PS 34 09 047 bekannt sind, haben sich in der Praxis bewährt. Dadurch, daß der Magnetfluß eines einzigen magnetischen Kreises für die axiale Stabilisierung, für die radiale Zentrierung und auch für die Dämpfung genutzt wird, haben diese Magnetlagerzellen neben einem einfachen Aufbau gute Dämpfungs- und auch relativ gute Lagereigenschaften.

Maßgebend für die Lagereigenschaften von Magnetlagern sind die axiale und radiale Stabilität (Steifigkeit). In axialer Richtung sind Magnetlager der hier betroffenen Art instabil. Es ist deshalb eine aktive Axial-Regelung erforderlich. Diese erfolgt mithilfe der Ringspulen, einem Axialsensor und geeigneten elektronischen Reglern.

Die Radialsteifigkeit hängt maßgeblich von der Stärke des Magnetflusses ab. Diese ist bauartbedingt begrenzt, da der Spalt zwischen den Permanentmagnetringen des Rotors, welcher die die Dämpfung des Lagers bewirkende Ringscheibe aufnehmen muß, relativ groß ist und damit einen relativ großen Magnetflußwiderstand bildet. Eine Verbesserung der Radialsteifigkeit könnte bei einer Magnetlagerzelle der hier betroffenen Art dadurch erreicht werden, daß der von den beiden Permanentmagnetringen erzeugte Magnetfluß verstärkt wirkt. Dieses würde jedoch eine maßgebliche Vergrößerung sowohl der magnetflußerzeugenden als auch magnetflußführenden Bauteile notwendig machen. Bei schnell drehenden Rotoren, für die Magnetlager gerade besonders geeignet sind, wären aufwendige Maßnahmen zur Beherrschung der Fliehkräfte erforderlich. Auch zusätzlich noch entstehende Wärme müßte abgeführt werden.

Aus der EP-A-332 979 ist eine magnetische Lagerung für eine Welle bekannt, die ein Schwerpunktlager 5 mit relativ hoher radialer Steifigkeit und ein Stabilisierungslager 7 mit relativ geringer radialer Steifigkeit umfaßt (Fig. 1). Das Schwerpunktlager ist ein reines Permanentmagnetlager mit drei Statormagnetringen und zwei Rotormagnetringen (Fig. 2a). Zur Erhöhung der Lagersteifigkeit können jeweils konzentrisch angeordnete Magnetringpaare die Stator- und Rotormagnetringe bilden (Fig. 2b). Das Stabilisierungslager 7 (Fig. 3) mit relativ geringer Steifigkeit ist eine Magnetlagerzelle der gattungsgemäßen Art. Sie weist - wie auch die Lagerzelle nach der DE-C-34 09 047 - als Magnetkräfte erzeugende Elemente zwei Rotormagnetringe und zwei Stator-Ringspulen auf.

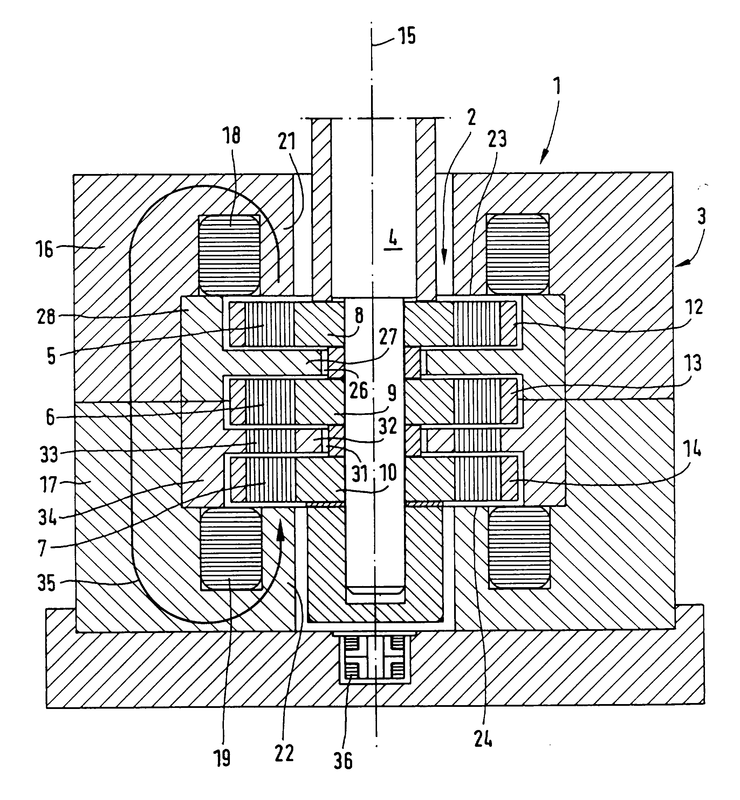

Der vorliegenden Erfindung liegt die Aufgabe zugrunde, die Radialsteifigkeit einer Magnetlagerzelle der eingangs genannten Art ohne aufwendige Maßnahmen maßgeblich zu verbessern.

Erfindungsgemäß wird diese Aufgabe dadurch gelöst, daß auf der Welle ein weiterer Permanentmagnetring befestigt und zwischen den Polbauteilen des Stators angeordnet ist, daß der weitere Permanentmagnetring mit dem benachbarten Permanentmagnetring einen Spalt bildet und daß in diesen Spalt eine am Stator befestigte Ringscheibe hineinragt, die im Bereich der rotierenden Permanentmagnetringe des Rotors einen axial magnetisierten Stator-Permanentmagnetring trägt. Bei einer Magnetlagerzelle dieser Art sind der zusätzliche Rotor-Permanentmagnetring und auch der zusätzliche Stator-Permanentmagnetring nach wie vor Bauteile des einzigen, die Achse torrodial umgebenden Magnetkreises. Die Spalte zwischen dem Stator-Permanentmagnetring und den benachbarten Rotor-Permanentmagnetringen können sehr klein gehalten werden, so daß eine maßgebliche Verbesserung (um mehr als den Faktor 4) der Radialsteifigkeit erreicht wird. Die erfindungsgemäße Magnetlagerzelle baut im Vergleich zur vorbekannten Magnetlagerzelle lediglich in axialer Richtung etwas größer. Zusätzliche Fliehkraftprobleme treten nicht auf.

Weitere Vorteile und Einzelheiten der Erfindung sollen anhand eines in der Figur dargestellten Ausführungsbeispieles erläutert werden.

Die in der Figur dargestellte Magnetlagerzelle 1 umfaßt den Rotor 2 und den Stator 3.

Bestandteile des Rotors 2 sind die Welle 4 und die auf der Welle 4 befestigten Permanentmagnetringe 5, 6 und 7. Zur Befestigung der Permanentmagnetringe 5 bis 7 auf der Welle 4 sind innere Nabenringe 8, 9, 10 und äußere Armierungsringe 12, 13, 14 vorgesehen, die beispielsweise miteinander verklebt sind.

Der Stator 3 umfaßt rotationssymmetrisch zur zentralen Achse 15 gestaltete Polbauteile 16, 17, deren gemeinsamer Querschnitt im wesentlichen C-förmig ist. Im stirnseitigen Bereich des C befinden sich die Ringspulen 18, 19. Die inneren Abschnitte 21, 22 bilden den Permanentmagnetringen 5 bis 7 des Rotors 2 zugewandte Polflächen 23, 24.

In den Spalt 26 zwischen den Permanentmagnetringen 5 und 6 greift die Ringscheibe 27 ein, die aus nicht magnetisierbarem Material hoher elektrischer Leitfähigkeit, beispielsweise Kupfer besteht. Die Ringscheibe 27 weist peripher einen zylindrischen Abschnitt 28 auf, der dem Bauteil 16 von innen anliegt. Bei im wesentlichen axial gerichteten Relativbewegungen werden in der Ringscheibe 27 und auch im zylindrischen Abschnitt 28 Wirbelströme erzeugt, die die gewünschte dämpfende Wirkung haben. Der zylindrische Abschnitt 28 hat Zentrierfunktion und erleichtert darüberhinaus die Abfuhr der durch die Wirbelströme entstehenden Wärme.

In den Spalt 31 zwischen den Permanentmagnetringen 6 und 7 ragt eine Ringscheibe 32 hinein, die einen Permanentmagnetring 33 trägt. Die radialen Abmessungen dieses Stator-Permanentmagnetringes 33 entsprechen den Abmessungen der Rotorpermanentmagnetringe 6 und 7. Im übrigen besteht die Scheibe 32 aus nicht magnetisierbarem Material und weist ebenfalls peripher den zylindrischen Abschnitt 34 auf, der dem Bauteil 17 zum Zwecke der Zentrierung von innen anliegt. Hat das Material zusätzlich eine hohe elektrische Leitfähigkeit, dann trägt es zur Verbesserung der Dämpfungseigenschaften bei.

Die Magnete 5, 6, 33, 7 sind derart in axialer Richtung magnetisiert, daß sie einander anziehende Kräfte ausüben. Zusammen mit den Polbauteilen 16 (21) und 17 (22) bilden sie einen Magnetkreis (Pfeil 35), der die Ringspulen 18, 19 einschließt und die zentrale Achse 15 torrodial umgibt. Mit Hilfe der Spulen 18, 19, einem Axialsensor 36 und eines nicht dargestellten Reglers erfolgt in bekannter Weise die aktive Axial-Regelung. Die Abstände zwischen den Permanentmagneten 6 und 33 bzw. 33 und 7 können klein gehalten werden, so daß eine hohe Radialsteifigkeit erreicht wird. Da der Magnetfluß auch die Scheibe 27 durchsetzt, hat die erfindungsgemäße Magnetlagerzelle neben den gegenüber dem Stand der Technik erheblich verbesserten Lagereigenschaften nach wie vor ihre guten Dämpfungseigenschaften.

## Patentansprüche

1. Rotationssymmetrisch aufgebaute Magnetlagerzelle (1)mit einem um die zentrale Achse (15)der Zelle drehbar angeordneten
- Rotor (2), der eine Welle (4) und zwei auf der Welle mit axialem Abstand befestigte, axial magnetisierte Permanentmagnetringe (5, 6) aufweist,
sowie mit einem
- Stator (3), der zwei Ringspulen (18, 19), Polbauteile (16, 17)und eine in den Spalt (26) zwischen den Permanentmagnetringen (5, 6) des Rotors (2) hineinragende erste Ringscheibe (27) aus nicht magnetisierbarem Material hoher elektrischer Leitfähigkeit aufweist,
wobei die Rotor- und Statorbauteile derart zueinander angeordnet sind, daß ein die zentrale Achse (15) torroidal umgebender Magnetfluß (35) erzeugt wird,
dadurch gekennzeichnet,
- daß auf der Welle (4) ein weiterer Permanentmagnetring (7) befestigt und zwischen den Polbauteilen des Stators (3) angeordnet ist,
- daß der weitere Permanentmagnetring (7) mit dem benachbarten Permanentmagnetring einen Spalt (31) bildet und
- daß in diesen Spalt (31) eine am Stator (3) befestigte zweite Ringscheibe (32) hineinragt, die im Bereich der rotierenden Permanentmagnetringe (6, 7) des Rotors (2) einen axial magnetisierten Stator-Permanentmagnetring (33) trägt.

2. Magnetlagerzelle nach Anspruch 1, dadurch gekennzeichnet, daß das Trägermaterial der zweiten Ringscheibe (32) aus nicht magnetisierbarem Werkstoff besteht.

3. Magnetlagerzelle nach Anspruch 2, dadurch gekennzeichnet, daß das Trägermaterial der zweiten Ringscheibe (32) zusätzlich eine hohe elektrische Leitfähigkeit hat und z.B. aus Kupfer besteht.

4. Magnetlagerzelle nach Anspruch 1, dadurch gekennzeichnet, daß die Ringscheiben (27, 32) peripher mit zylindrischen Abschnitten (28 bzw. 34) ausgerüstet sind, die den Polbauteilen (16, 17) von innen anliegen.

## Claims

1. Magnetic bearing cell (1) which is of rotationally symmetrical construction and has, rotatably disposed around the central axis (15) of the cell,
- a rotor (2) which has a shaft (4) and two axially magnetized permanent magnet rings (5, 6) mounted on the shaft at an axial distance,
and which also has
- a stator (3) which has two ring coils (18, 19), pole components (16, 17) and a first ring disc (27) which projects into the gap (26) between the permanent magnet rings (5, 6) of the rotor (2) and is composed of nonmagnetizable material of high electrical conductivity,
the rotor components and stator components being disposed with respect to one another in such a way that a magnetic flux (35) is generated which torroidally surrounds the central axis (15),
characterized in
- that a further permanent magnet ring (7) is mounted on the shaft (4) and is disposed between the pole components of the stator (3),
- that the further permanent magnet ring (7) forms a gap (31) with the adjacent permanent magnet ring and
- that there projects into said gap (31) a second annular disc (32) which is attached to the stator (3) and which carries an axially magnetized stator permanent magnet ring (33) in the region of the rotating permanent magnet rings (6, 7) of the rotor (2).

2. Magnetic bearing cell according to Claim 1, characterized in that the carrier material of the second annular disc (32) is composed of nonmagnetizable material.

3. Magnetic bearing cell according to Claim 2, characterized in that the carrier material of the second annular disc (32) additionally has a high electrical conductivity and is composed, for example, of copper.

4. Magnetic bearing cell according to Claim 1, characterized in that the annular discs (27, 32) are peripherally provided with cylindrical sections (28 or 34, respectively) which are in contact with the pole components (16, 17) from the inside.

## Revendications

1. Cellule de palier magnétique (1) de construction en symétrie de rotation, comportant un
- rotor (2) qui est disposé, avec liberté de rotation, autour de l'axe central (15) de la cellule et qui présente un arbre (4) et deux aimants permanents annulaires (5, 6) fixés sur l'arbre à une certaine distance axiale, et magnétisés axialement,
ainsi qu'un
- stator (3) qui présente deux bobines annulaires (18, 19), des composants polaires (16, 17) et un premier disque annulaire (27), pénétrant dans l'entrefer (26) existant entre les aimants permanents annulaires (5, 6) du rotor (2), en matériau non magnétisable de conductivité électrique élevée,
les composants formant le rotor et le stator étant disposés, l'un par rapport à l'autre, de façon que se produise un flux magnétique (35) entourant, à la façon d'un toroïde, l'axe central (15),
caractérisée par le fait
- qu'un autre aimant permanent annulaire (7) est fixé sur l'arbre (4) et disposé entre les composants polaires du stator (3),
- que l'autre aimant permanent annulaire (7) forme, avec l'aimant permanent annulaire voisin, un entrefer (31) et
- que dans cet entrefer (31) pénètre un second disque annulaire (32) qui est fixé au stator (3) et qui, dans la zone des aimants permanents annulaires rotatifs (6, 7) du rotor (2) porte un aimant permanent annulaire du stator (33) magnétisé axialement.

2. Cellule de palier magnétique selon la revendication 1, caractérisée par le fait que le matériau support du second disque annulaire (32) est composé de matériau non magnétisable.

3. Cellule de palier magnétique selon la revendication 2, caractérisée par le fait que le matériau support du second disque (32) présente en outre une conductivité électrique élevée et qu'il est par exemple constitué de cuivre.

4. Cellule de palier magnétique selon la revendication 1, caractérisée par le fait que les disques annulaires (27, 32) sont équipés, sur leur périphérie, de portions cylindriques (28 ou 34) qui, de l'intérieur, s'appuient contre les composants polaires (16, 17).
